# EUROPEAN PATENT APPLICATION

(11) **EP 1 175 059 A2**
(43) Date of publication of application: **23.01.2002**
(21) Application number: 01116776.4
(22) Date of filing: 20.07.2001
(51) Int. Cl.: H04L 29/06

(54) **A system and method for directing a media stream**

(30) Priority: 20.07.2000 US 219434
(71) Applicant: Radvision Ltd, Tel Aviv 69719 (IL)
(72) Inventor: Doron, Eli, Ganei Tikva 55900 (IL); Shalev, Uzi, Reut 71908 (IL)
(74) Representative: VOSSIUS & PARTNER

(57) **Abstract**

A system and method for directing a media stream includes a packet reader reading and correlating a packet with the media stream and readdressing the packet to a variable address associated with the media stream. The variable address may be changed in accordance with predefined criteria or in response to commands issued by the intended recipient of the packet.

## Description

The invention relates generally to the field of addressing communications in a distributed data network. More specifically, the present invention relates to a method and a system for directing a media stream.

The proliferation of high bandwidth network equipment has facilitated the expanded use of bandwidth intensive applications in general, and real time streaming data applications, such as V²oIP (Voice/Video over Internet Protocol), in particular. Although present day networks may have sufficient bandwidth to carry streaming media, they are for the most part unable to distinguish between conventional data packets and data packets comprising a "Real Time" ("RT") media streams. Therefore, present day networks and network routing equipment are inefficient at directing, routing or handling RT media streams which may require handling different than that for non-RL media stream data.

One example of a drawback present in present day networks is that the destination address of a media packet is determined at the source and may not be changed in route. Often a preferred route to the destination address is selected out of several alternative routes. The selection is performed according to predefined criteria, such as traffic congestion, size of object and priority. Once a preferred route is selected, the packet is sent to the destination address along the selected route. The destination address and the route may not be altered once the packet has left the source, therefore, if a change is required (for example, due to communication failure or change in the location of the intended recipient) the packet must be retransmitted by the source.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Figure 1 is a diagram showing a media stream director operating in a distributed network with two separate domains.

Figure 2 is a schematic block diagram of a media stream director according to the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

As part of the present invention a media stream director or directing system reads and correlates data packets with a given media stream. A readdressing module may readdress the data packet to a variable address associated with the media stream.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

As part of the present invention, a data packet associated with a media stream may be read and correlated with a specific data stream by an intermediate network entity, namely a media stream director. The packet may have been transmitted according to the User Datagram Protocol ("UDP ") or Real Time Protocol ("RTP"), such that the packet header may contain information about the I.P. address and port number of its intended recipient and additionally may contain information about the nature of the payload being carried by the packet. Packets carrying real time media stream data, such as voice or video may be distinguished from other types of packets, for example, by reading information in the packet's header.

A packet identified as carrying streaming media may be correlated to a specific destination or recipient by comparing the packet's destination I.P. and port number against a list of known I.P. addresses. A single recipient may receive multiple media streams, each stream having a unique port number. As part of the present invention, a packet re-addresser or readdressing module may change the destination address of a packet and transmit it to a destination different from that initially intended by the source. The new I.P. address may be for another recipient, a storage device, a coder/decoder, a code conversion device, a media format conversion device, a multicaster, an encryption device, a computing device, a media presentation device, a firewall authenticator, a firewall penetration device, a firewall negotiation device, a firewall gatekeeper, or a communication failure recovery device.

A control module may instruct the readdresser to readdress media stream packets based on predefined criteria, for example sending a voice media stream to a storage device in the event the packet's intended recipient has indicated they are unavailable to receive the stream. The control module may instruct the readdresser in response to a command issued by the intended recipient, such as "transfer the media stream to another recipient or to a multicasting system." The control module may also instruct the readdresser unit in response to an occurrence on the network, such as a communication failure or a firewall rejection of a packet. In response to a detected problem in transmission of a packet to a destination, the control module may instruct the readdresser unit to address the packet to another gateway or entry point into the network within which the intended recipient resides.

As part of the present invention, the intermediate network entity or media stream director may identify the beginning of a media stream transmission to a recipient within its domain, and may instruct the source of the transmission to address all packets directly to the media stream director. The media stream director may distinguish between packets associated with different media streams, each media stream intended for a specific recipient, by analyzing information in a packet's header (e.g. port number). Once a packet is received and correlated with a recipient, the director may transmit the packet to its intended recipient by readdressing the packet to the specific I.P. address of the intended recipient. As described above, the media stream director may also readdress a received packet to a variable I.P. address other than that belonging to the intended recipient. The variable address may be set to be within or without the director's domain.

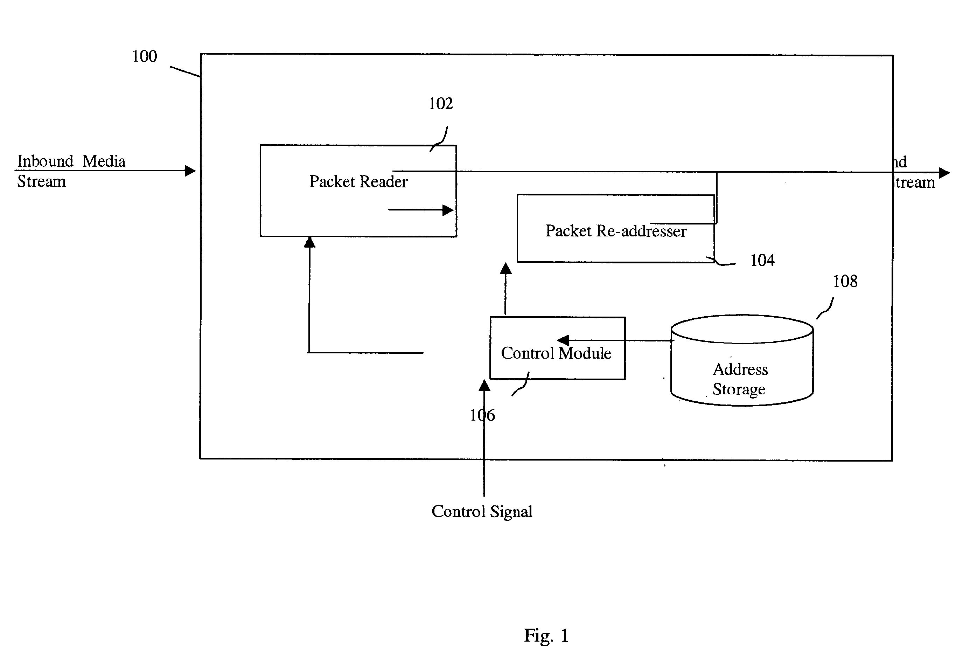

Turning now to figure 1, there is shown a media stream director 100 according to the present invention. The director 100 may contain a data packet reader 102 which may receive inbound data packets. A control module or controller 106 may instruct a packet readdresser 104 to readdress the destination address of the received packet. The controller 106 may receive a command to instruct the readdresser 104 via a control signal or may operate according to predefined criteria or instructions stored in storage 108. The controller 106 may instruct the readdresser to readdress a received packet to an address stored in storage 108 or to an address received as part of a command via the control signal.

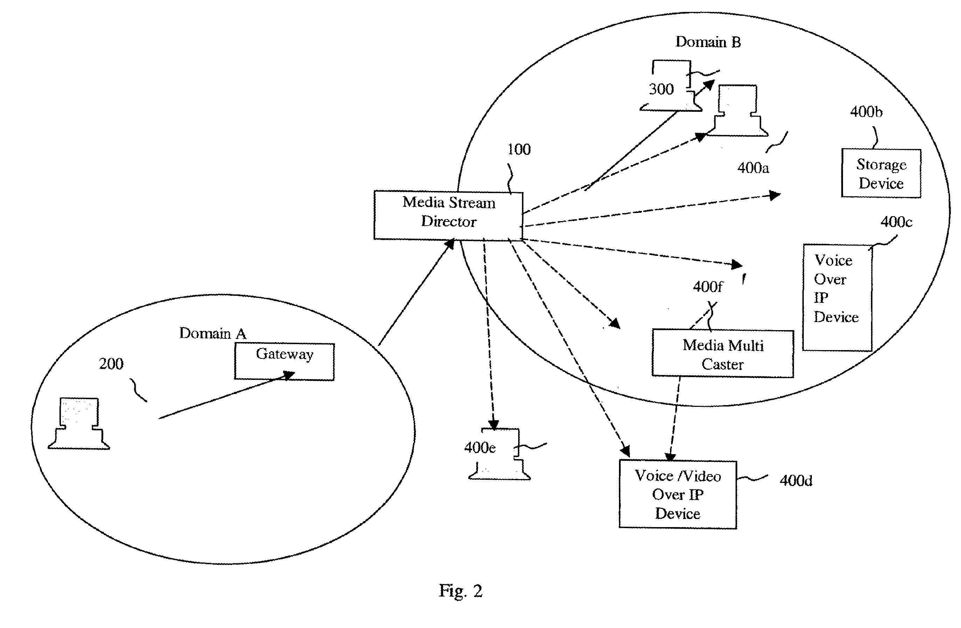

Turning now to figure 2, there is shown an example of a distributed data network utilizing a media stream director 100 according to the present invention. As part of this example, a media stream source in Domain A, such as computer 200, may produce a media stream intended for destination computer 300 in Domain B. A packet containing streaming media originating from computer 200 may pass through a gateway and be received by director 200 at or near an entry point to Domain B. The director 100 may direct the received packet to the destination intended by the source or may direct the packet to one or more other destinations 400a to 400f. The director 100 may redirect or readdress a packet and send a media stream to a destination other than the one intended by the source without notifying the source of the change. The source may continue to transmit packets to an I.P. address and port number it believes to belong to the intended recipient.

## Claims

1. A method for directing a media stream comprising reading and correlating a packet with the media stream and readdressing the packet to a variable address associated with the media stream.

2. The method according to claim 1, further comprising detecting the start of a media stream transmission and instructing a source of the transmission to address data packets to an intermediate network entity.

3. The method according to claim 1 or 2, further comprising checking a readdressing indicator and readdressing the packet if the indicator so indicates.

4. The method according to any one of the preceding claims, further comprising checking the variable address and readdressing the packet if the variable address is different from a destination address in the packet.

5. The method according to any one of the preceding claims, further comprising setting the variable address to an address of a network entity selected from the group consisting of a storage device, a coder/decoder, a code conversion device, a media format conversion device, a multicaster, an encryption device, a computing device, a media presentation device, a firewall authenticator, a firewall penetration device, a firewall negotiation device, a firewall gatekeeper and a communication failure recovery device.

6. The method according to claim 5, further comprising receiving a signal containing a destination address and setting the variable address to the received address.

7. A system for directing a media stream comprising an intermediate network entity adapted to receive a data packet and to correlate the packet with the media stream, a readdressing module adapted to readdress the data packet to a variable address associated with the media stream.

8. The system according to claim 7, further comprising a media stream detection module adapted to detect the start of a media stream and to instruct a source of the media stream to address the media stream's packets to the intermediate network entity.

9. The system according to claim 8, further comprising one or more of the network entities selected from the group consisting of a storage device, a coder/decoder, a code conversion device, a media format conversion device, a multicaster, an encryption device, a computing device, a media presentation device, a firewall authenticator, a firewall penetration device, a firewall negotiation device, a firewall gatekeeper and a communication failure recovery device.

10. The system according to claim 8, further comprising a data table containing an address of at least one of the network entities listed in claim 9.

11. An article comprising: a storage medium having stored thereon instructions, that, when executed by a computing platform, cause the computing platform to read and correlate a packet header with a media stream and readdress the packet to a variable address associated with the media stream.

12. The article of claim 11, further comprising instructions when executed cause the platform to detect the start of a media stream transmission and cause a source of the transmission to address data packets to the platform.

13. The article of claim 12, further comprising instructions when executed cause the platform to set the variable address to an address of a network entity selected from the group consisting of a storage device, a coder/decoder, a code conversion device, a media format conversion device, a multicaster, an encryption device, a computing device, a media presentation device, a firewall authenticator, a firewall penetration device, a firewall negotiation device, a firewall gatekeeper and a communication failure recovery device.

14. The article of claim 13, further comprising instructions when executed cause the platform to receive a signal containing a destination address and to set the variable address to the received address.

15. Computer program comprising program code means for performing the method of any one of claims 1 to 6 when the program is run on a computer.

16. Computer program product comprising program code means stored on a computer readable medium for performing the method of any one of claims 1 to 6 when said program product is run on a computer.

17. Computer system for performing the method of any one of claims 1 to 6.
